**Europäisches Patentamt**

**European Patent Office**

**Office européen des brevets**

(11) Publication number: **0 179 655**
**B1**

## (12) EUROPEAN PATENT SPECIFICATION

(45) Date of publication of patent specification: **07.02.90**

(21) Application number: **85307658.6**

(22) Date of filing: **23.10.85**

(51) Int. Cl.⁵: **H 04 N 5/782,** G 11 B 15/18, G 11 B 15/473

(54) Intermittent magnetic video recorder.

(30) Priority: **23.10.84 JP 224776/84**

(43) Date of publication of application:
**30.04.86 Bulletin 86/18**

(45) Publication of the grant of the patent:
**07.02.90 Bulletin 90/06**

(84) Designated Contracting States:
**DE FR GB**

(56) References cited:
**EP-A-0 123 111**
**WO-A-84/01253**
**US-A-4 180 833**
**US-A-4 306 254**

(73) Proprietor: **MITSUBISHI DENKI KABUSHIKI KAISHA**
**2-3, Marunouchi 2-chome Chiyoda-ku Tokyo 100 (JP)**

(72) Inventor: **Shimoi, Hiroshi c/o Mitsubishi Denki K.K.**
**Kyoto Seisakusho 1 Babazusho**
**Nagaokakyo-shi Kyoto-fu (JP)**
Inventor: **Ando, Nobuyuki c/o Yamako Denki K.K.**
**Kyoto Kojo, 1 Babazusho**
**Nagaokakyo-shi Kyoto-fu (JP)**
Inventor: **Inadomi, Takafumi c/o Yamako Denki K.K.**
**Kyoto Kojo, 1 Babazusho**
**Nagaokakyo-shi Kyoto-fu (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

### Background of the invention
### Field of the invention

The present invention relates to a time-lapse magnetic video recorder. More specifically, it relates to an improvement in a time-lapse magnetic video recorder which intermittently drives a magnetic tape in a stopped state or at a speed different from a prescribed tape feed speed.

### Description of the prior art

US—A—4,180,833 describes a magnetic video recorder comprising:

a rotary drum;

a drum motor for driving said rotary drum;

magnetic heads mounted on said rotary drum;

means for causing a magnetic recording medium to move past the rotary drum at a predetermined speed during a reproducing process and to remain stationary or to move past the rotary drum at a speed different from said predetermined speed during a recording process.

The system of the above patent provides the facility of recording and playing back signals with the recording medium being fed at one half the normal speed. The present invention, in contrast, concerns time-lapse recording wherein recording may take place at reduced tape speed, but wherein playback occurs at normal speed.

A time-lapse magnetic video recorder has already been proposed, in the art and put into practice. Such a time-lapse magnetic video recorder drives a magnetic tape by one frame of a video signal to record the same in response to a magnetic tape recording command signal, stops the magnetic tape for a predetermined period after completion of the recording and then feeds the magnetic tape by one frame again in response to a subsequent recording command signal, thereby to repeat such operations. Three types of tape feed speeds are generally employed in such a time-lapse magnetic video recorder. In the first type, recording is made in one frame unit of the video signal wherein the magnetic tape is stopped after being fed by one frame. In the second type, recording is made in one frame unit of the video signal during which the magnetic tape is fed at a speed of, e.g., 2/3 to 1/2 of a prescribed tape feed speed in a one-frame feeding operation of the magnetic tape. In the third type, recording is made in one frame unit of the video signal during which the magnetic tape is fed by one frame at the prescribed tape feed speed.

With respect to magnetic tape feed control systems and the quality of reproduced pictures, the aforementioned three methods all have both advantages and disadvantages.

In the first method, feeding of the magnetic tape is relatively readily controlled since the video signal is recorded when the magnetic tape is stopped, whereas alignment (hereinafter referred to as "H alignment") of horizontal synchronizing signals in reproduced video signals is irregularized causing distortion of the upper parts of pictures reproduced on the screen of a monitor TV, or the colors thereof are lost. Such irregularity in the R alignment is caused by difference in tape feed speeds for recording and reproducing operations, and in order to overcome such a disadvantage, positions of magnetic heads may be made to deviate from each other or the video signals may be delayed in the recording or reproducing operation so as to virtually retain the H alignment.

However, although the H alignment is effective with respect to luminance signals, colors of the pictures are lost if phase alignment of color signals is abnormal in the PAL system, and hence correction means therefore is extremely complicated in consideration of the phase alignment.

Regarding the second method, although the tape feed speed is slower than the prescribed speed, recording is made while the magnetic tape is fed, whereby tape feed control is further complicated in comparison with the above described first method. However, irregularity in the M alignment of reproduced video signals is reduced and slight H deviation is pulled in the lock-in range of synchronization by a monitor TV, whereby normal reproduced pictures can be obtained according to circumstances.

In the third method, time-lapse recording is made at the prescribed tape feed speed whereby the H alignment is normal to obtain correctly reproduced distorsionless pictures. However, the tape feed control is extremely complicated and a period of one or more seconds may be required for the time-lapse driving, depending on the power of a capston motor, motor load and tape feed control method. For example, when time-lapse recording is made in a general magnetic tape T-120 capable of recording for 120 minutes in two-hour mode recording to enable recording for one day (24 hours), the time-lapse driving period is simply calculated as follows, assuming that there is employed a magnetic video recorder/reproducer of the NTSC system:

time-lapse driving period=one from period $(=1/30 \text{ sec})\times24 \text{ h}/2 \text{ h}=0.4 \text{ sec}$

Assuming that the third method requires the time-lapse driving period of 1 sec as hereinabove described, 24-hour and 48-hour recording cannot be realized in view of the above calculation.

As hereinabove descirbed, the tape feed speeds in the first and second methods are slower than the prescribed speed and hence various correction means are employed in recording or reproducing systems to obtain normal pictures. However, when reproduction is made by another type of magnetic video recorder/reproducer provided with no correction means, the reproduced pictures are distorted and the colors thereof are lost as a matter of course. This is because magnetic tapes which are not interchangeable must be fed during recording at the prescribed tape feed speed in order to make interchangeable use of the magentic tapes recorded in the present formats. Thus, interchangeable use of the magnetic tapes can only be realized by the third method, whereas the time-lapse driving period is prolonged as hereinabove described and time-lapse recording with reduced time lapse, e.g., 24-hour or 48-hour recording is impossible.

Accordingly it would be desirable to provide a time-lapse magnetic video recorder which can obtain an interchangeable recording format on a magnetic tape even if the tape is stopped or fed at a speed different from a prescribed tape feed speed in the recording operation.

Summary of the invention

According to one aspect of the present invention there is provided a time-lapse video recorder as defined by claim 1 below.

According to a further aspect of the present invention there is provided a method of time-lapse magnetic video recording as defined by claim 8 below.

A preferred embodiment involves the separation of vertical synchronizing signals from composite video signals and generate corrected vertical synchronizing signals which are different in frequency and phase from the vertical synchronizing signals to rotate a drum motor in synchronization with the corrected vertical synchronizing signals thereby to record intermittently the composite video signals on a magnetic tape by magnetic heads mounted on the rotary drum. The vertical synchronizing signals are thus separated and then corrected by an amount which compensates for the effects of the reduction in tape feed speed.

Thus rotation of the drum motor is so controlled as to be synchronized with the corrected vertical synchronizing signals, whereby, even if the magnetic tape is fed at a speed slower than a prescribed tape feed speed or recording is made when the magnetic tape is stopped, the recording format of the recorded magnetic tape is made interchangeable with other magnetic tapes which are fed at the prescribed tape feed speed in recording.

Oscillating pulses are preferably generated in synchronization with vertical synchronizing signals to be counted to a predetermined number, thereby to output corrected vertical synchronizing signals when the oscillating pulses reach the predetermined number.

Further, a servo voltage is preferably supplied to a drum motor in order to control the same so that the speed and phase of rotation of the drum motor detected by detection means provided in relation to the drum motor are synchronized with the corrected vertical synchronizing signals.

The above features, aspects and advantages of the present invention will become more apparent from the following detailed description of the present invention when taken in conjunction with the accompanying drawing.

Brief description of the drawings

Fig. 1 is a schematic block diagram showing an embodiment of the present invention;

Fig. 2 is a block diagram showing a vertical synchronizing signal separation circuit as shown in Fig. 1;

Fig. 3 is a waveform diagram of respective components shown in Fig. 2;

Fig. 4 is a block diagram showing a correction vertical synchronizing signal generator as shown in Fig. 1;

Figs. 5 and 6 are waveform diagrams of respective components shown in Fig. 4;

Fig. 7 is a block diagram showing a drum controller as shown in Fig. 1;

Fig. 8 is a block diagram showing a capstan controller as shown in Fig. 1;

Fig. 9 is illustrative of video tracks recorded on a magnetic tape;

Fig. 10 illustrates an example of a recording format recorded on a magnetic tape according to the embodiment of the preesnt invention;

Fig. 11 illustrates an example of a time chart showing the time lag between vertical synchronizing signals and corrected vertical synchronizing signals according to the embodiment of the present invention;

Fig. 12 illustrates another example of the recording format recorded on the magnetic tape according to the embodiment of the preesnt invention; and

Fig. 13 illustrates another example of a time chart showing the time lags between the vertical synchronizing signals and corrected vertical synchronizing signals according to the embodiment of the present invention.

Description of the preferred embodiments

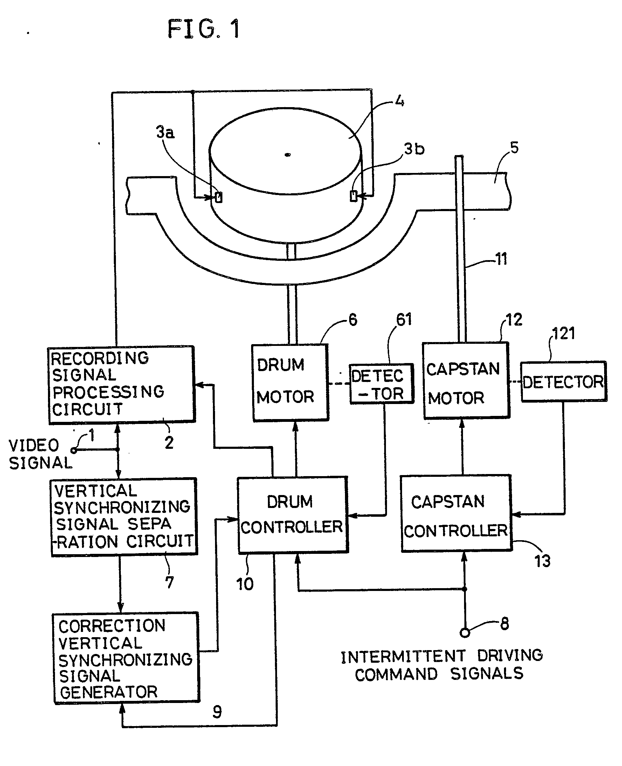

Fig. 1 is a schematic block diagram showing an embodiment of the present invention. Referring to Fig. 1, description is now made on the entire structure of the embodiment according to the present invention. A video signal input terminal 1 receives composite video signals, which are then supplied to a recording signal processing circuit 2. The recording signal processing circuit 2 is adapted to perform recording signal processing of the inputted composite video signals, and includes circuits for performing well-known signal processing operations such as preemphasis, FM modulation, recording equalization and recording amplification.

A rotary drum 4 is provided in prescribed positions with magnetic heads 3a and 3b, which receive recording signals from the recording signal processing circuit 2, thereby to record the received recording signals on a magnetic tape 5. The rotary drum 4 is rotatingly driven by a drum motor 6. The composite video signals inputted on the video signal input terminal 1 are also supplied to a vertical synchronizing signal separation circuit 7, which is adapted to detect and separate only vertical synchronizing signals from the inputted composite video signals. The separated vertical synchronizing signals are supplied to a correction vertical synchronizing signal generator 9. A command signal input terminal 8 received intermittent (i.e. time-lapse) driving command signals. The corrected vertical synchronizing signal generator 9 outputs either the vertical synchronizing signals separated by the vertical synchronizing signal separation circuit 7 or corrected vertical synchonizing signals (hereinafter referred to as correction vertical synchronizing signals) different in frequency and phase from the said vertical synchronizing signals, depending on whether or note the intermittent driving command signals are received.

The vertical synchronizing signals outputted from the correction·vertical synchronizing signal generator 9 are supplied to a drum controller 10. The drum controller 10 received detection signals for detecting the speed and phase of rotation from a detector 61 provided in relation to the drum motor 6. The drum controller 10 servo-controls the drum motor 6 so that the vertical synchronizing signals or correction vertical synchronizing signals are synchronized with the detection signals.

The magnetic tape 5 is driven by a capstan 11, which is rotatingly driven by a capstan motor 12. The capstan motor 12 is servo-controlled by a capstan controller 13. Provided in relation to the capstan motor 12 is a detector 121 for detecting the speed and amount of rotation of the capstan motor 12, and detection signals on the detected speed and amount of rotation are supplied to the capstan controller 13. The capstan controller 13 servo-controls the capstan motor 12 on the basis of the inputted detection signals on the speed and amount of rotation.

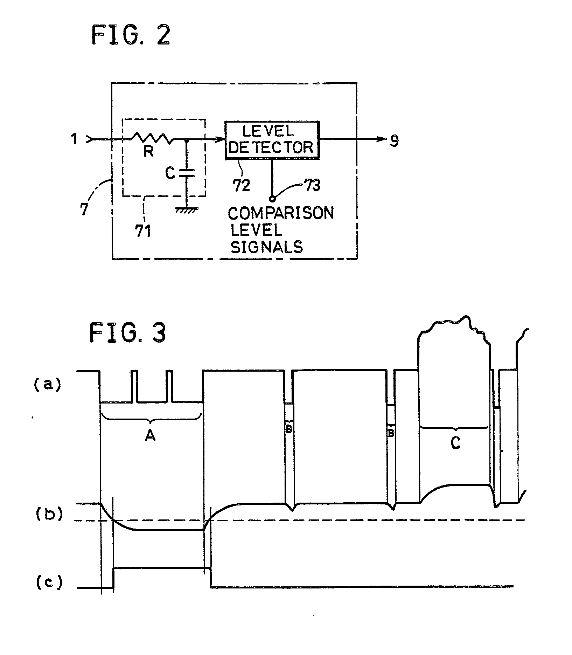

Fig. 2 is a block diagram showing the vertical synchronizing signal separation circuit 7 as shown in Fig. 1, and Fig. 3 is a waveform diagram of respective components as shown in Fig. 2.

Referring now to Figs. 2 and 3, description is made on the structure and operation of the vertical synchronizing signal separation circuit 7. The vertical synchronizing signal separation circuit 7 is formed by a low-pass filter 71 consisting of a resistor R and a capacitor C and a level detector 72. The low-pass filter 71 receives composite video signals including vertical synchronizing signals A, horizontal synchronizing signals B and video signals C as shown at Fig. 3(a), thereby to integrate the composite video signals. Therefore, the low-pass filter 71 outputs such signals as shown by the solid line at Fig. 3(b), which are supplied to the level detector 72. The level detector 72 further receives comparison level signals as shown by the dot line at Fig. 3(b) through an input terminal 73. The level detector 72 outputs high-level signals as shown at Fig. 3(c) when the output levels of the low-pass filter 71 are lower than the comparison level signals, thereby to separate and detect only the vertical synchronizing signals from the composite video signals.

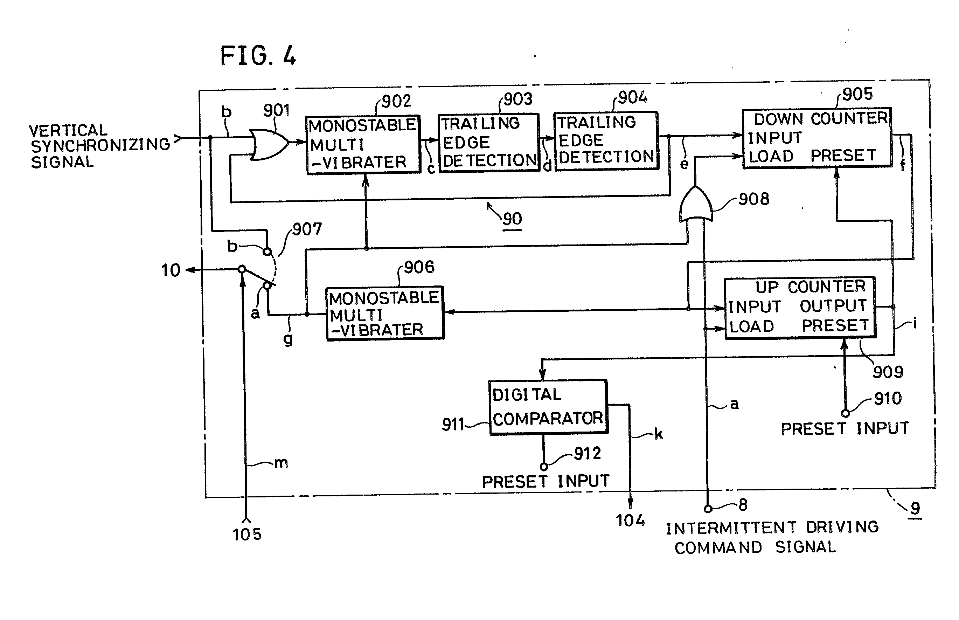

Fig. 4 is a block diagram showing the correction vertical synchronizing signal generator 9. Referring now to Fig. 4, description is made of the structure of the correction vertical synchronizing signal generator 9, which is formed by an oscillation circuit 90, a down counter 905, a monostable multivibrator 906, an OR circuit 908, an up counter 909 and a digital comparator 911. The oscillation circuit 90 is formed by an OR circuit 901, a monostable multivibrator 902 and first and second trailing edge detection circuits 903 and 904.

The vertical synchronizing signals separated by the aforementioned vertical synchronizing signal separation circuit 7 are supplied to the monostable multivibrator 902 through the OR circuit 901. The monostable multivibrator 902 generates pulse signals on the basis of a predetermined time constant in synchronization with the vertical synchronizing signals. The first trailing edge detection circuit 903 detects trailing of the pulse signals outputted from the monostable multivibrator 902 to output first trailing edge detection signals. The second trailing edge detection circuit 904 detects the trailing portions of the first trailing edge detection signals, thereby to supply second trailing edge detection signals to the monostable multivibrator 902 through the OR circuit 901 as well as to the down counter 905. Carry-down outputs $f$ from the down counter 905 are supplied to the up counter 909 as well as to the monostable multivibrator 906. The input terminal 8 receives the intermittent driving command signals, which are supplied to a load input end of the down counter 905 through the OR circuit 908. The down counter 905 further receives in its preset input end counter outputs from the up counter 909, which are also supplied to the digital comparator 911. The up counter 909 receives in its preset input end 910 a preset input, which is set at "1" in this embodiment. The digital comparator 911 receives in its preset input end 912 a preset input of, e.g., "7". A changeover switch means 907 is adapted to switch the vertical synchronizing signals separated by the vertical synchronizing signal separation circuit 7 and the correction vertical synchronizing signals outputted from the monostable multivibrator 906 on the basis of switching control signals $m$ supplied by the drum controller 10. The vertical synchronizing signals or correction vertical synchronizing signals selected by the changeover switch means 907 are supplied to the drum controller 10.

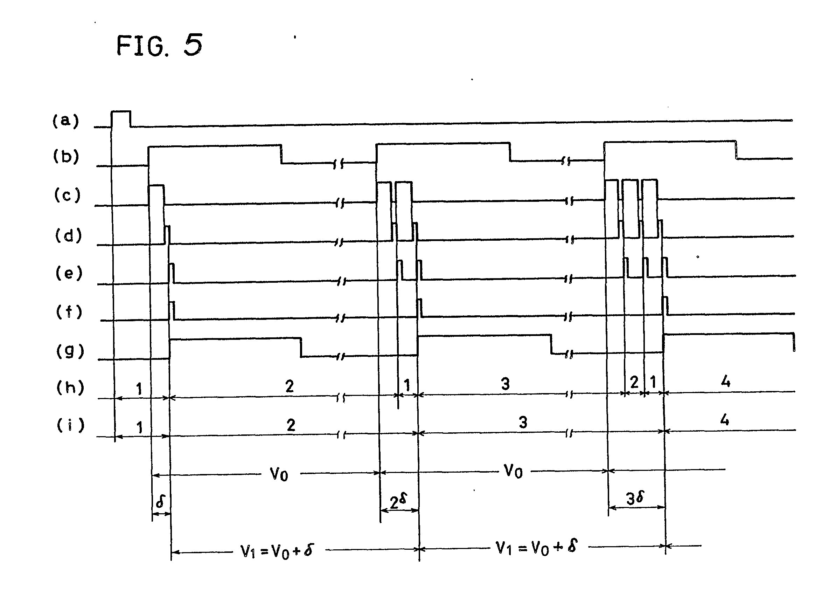

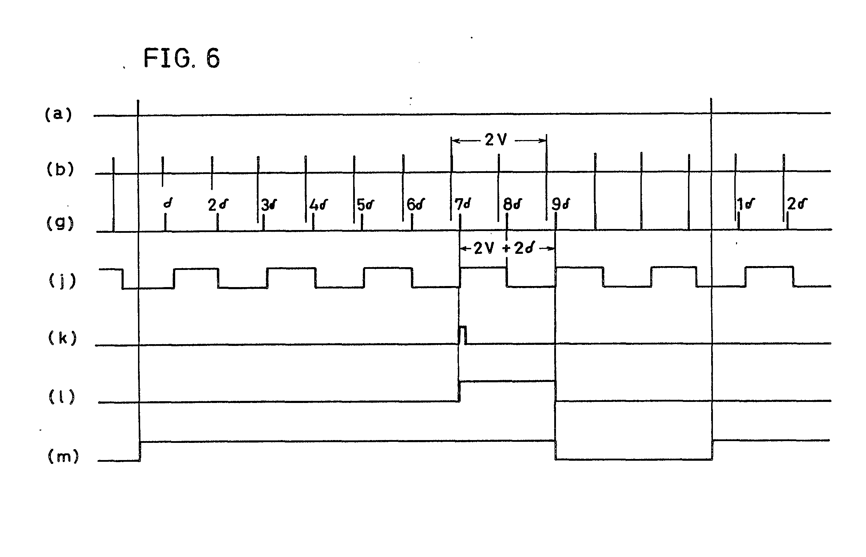

Figs. 5 and 6 are waveform diagrams of the respective components of the correction vertical synchronizing signal generator 9 as shown in Fig. 4.

Description is now made on the operation of the correction vertical synchronizing signal generator 9 with reference to Figs. 4 to 6. When the intermittent driving signals as shown at Figs. 5(a) and 6(a) are inputted in the input terminal 9, the preset input received in the preset input terminal 910, i.e., that of "1" in this embodiment is preset at the up counter 909. On the other hand, the counter output of the up counter 909, i.e., that of "1" in this embodiment is forcibly preset in the down counter 905 in response to the intermittent driving signals.

In such a state, the vertical synchronizing signals of a period V separated by the vertical synchronizing signal separation circuit 7 as shown at Figs. 5(b) and 6(b) are inputted in the first monostable multivibrator 902 through the OR circuit 901. The first monostable multivibrator 902 outputs pulse signals c as shown at Fig. 5(c) which become high levels for a predetermined period from input of the vertical synchronizing signals. The pulse signals c are received by the first trailing edge detection signals 903, thereby to supply first trailing edge detection signals d as shown at Fig. 5(d) to the second trailing edge detection circuit 904. The second trailing edge detection circuit 904 detects the trailing edges of the first trailing edge detection signals d to output second trailing edge detection signals e, as shown at Fig. 5(e). The second trailing edge detection signals e are returned to the first monostable multivibrator 902 through the OR circuit 901. Thus, the OR circuit 901, first monostable multivibrator 902 and first and second trailing edge detection circuits 903 and 904 are adapted to form a closed loop, which performs oscillation unless the first monostable multivibrator 902 receives a clear signal.

On the other hand, the second trailing edge detection signals e outputted from the second trailing edge detection circuit 904 are also supplied to the counter input of the down counter 905. The down counter 905 counts the second trailing edge detection signals e by the preset number, thereby to output carry-down output signals f as shown at Fig. 5(f). The carry-down output signals f are inputted in the counter input of the up counter 909 to advance the counter outputs of the up counter 909 as shown at Fig. 5(i) by 1 thereby to update the preset input values of the down counter 905. The counter outputs i of the up counter 909 are also supplied to the second monostable multivibrator 906, to output signals g as shown at Fig. 5(g), which serve as the correction vertical synchronizing signals (period $v_0=v_0+\delta$). The correction vertical synchronizing signals g are supplied to the drum controller 10 through the changeover switch means 907 as well as supplied to the clear input end of the first monostable multivibrator 902, thereby to stop oscillation of the oscillation circuit 90. The correction vertical synchronizing signals g are further received in the load input end of the down counter 905 through the OR circuit 908, thereby to preset the counter outputs of the up counter 909 in the down counter 905.

On the other hand, the counter outputs of the up counter 909 are also supplied to the digital comparator 911. The digital comparator 911 compares the counter outputs i of the up counter 909 with the preset value inputted in the preset input end 912, thereby to output signals k as shown at Fig. 6(k) to the drum controller 10. The changeover switch means 907 receives switching signals m as shown at Fig. 6(m) from the drum controller 10, to be switched to a terminal a side when the switching signals m are at high levels and to a terminal b side when the switching signals m are at low levels.

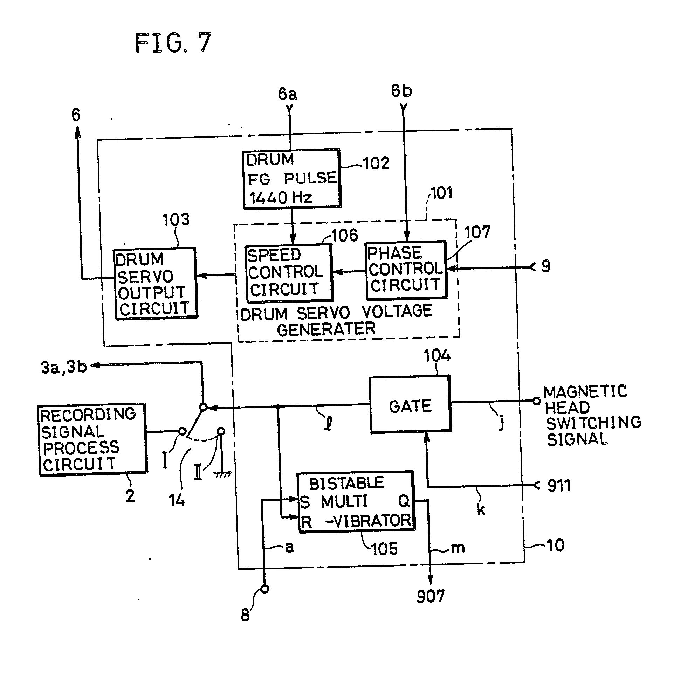

Fig. 7 is a schematic block diagram showing the drum controller 10. Description is now made on the structure of the drum controller 10 with reference to Fig. 7. The drum controller 10 is formed by a drum servo voltage generating means 101, a drum FG pulse generating means 102, a drum servo output circuit 103, a gate 104 and a bistable multivibrator 105. The drum servo voltage generating means 101 is formed by a speed control circuit 106 and a phase control circuit 107. The drum servo voltage generating means 101 receives the vertical synchronizing signals or correction vertical synchronizing signals outputted from the correction vertical synchronizing signal generator 9 as shown in Fig. 4 as well as rotation phase detection signals 6b. The rotation phase detection signals 6b are supplied to the phase control circuit 107 included in the drum servo voltage generating means 101. The drum FG pulse generation circuit 102 receives rotation speed detection signals 6a, to generate drum FG pulses of 1440 Hz on the basis of the rotation speed detection signals 6a, thereby to supply the same to the drum servo voltage generating means 101. The drum servo voltage generating means 101 generates servo voltage so that the vertical synchronizing signals or correction vertical synchronizing signals are synchronized with the drum FG pulses based on the rotation speed detection signals 6a and the rotation phase detection signals 6b.

The servo voltage generated by the drum servo voltage generating means 101 is supplied to the drum servo output circuit 103. The drum servo output circuit 103 outputs signals for servo-controlling the drum motor 6, on the basis of the servo voltage outputted from the drum servo voltage generating means 101. The gate 104 receives magnetic head switching signals j as shown at Fig. 6(j), as well as the signals k as shown at Fig. 6(k) from the digital comparator 911 of the correction vertical synchronizing signal generator 9 upon intermittent driving. The gate 104 outputs recording command signals as shown at Fig. 6(I) to the changeover switch 14. The changeover switch 14 is connected to the terminal a side in standard driving, and switched to the terminal a side when the recording command signals I are at high levels while being switched to the terminal b side when the recording command signal I are at low levels during the intermittent driving operation. The bistable multivibrator 105 receives in its set terminal S the intermittent driving command signals I and the recording command signals I from the gate 104 in its reset terminal R. The bistable multivibrator 105 then outputs the switching signals m as shown at Fig. 6(m) to the changeover switch 907 of the correction vertical synchronizing signal generating circuit 9.

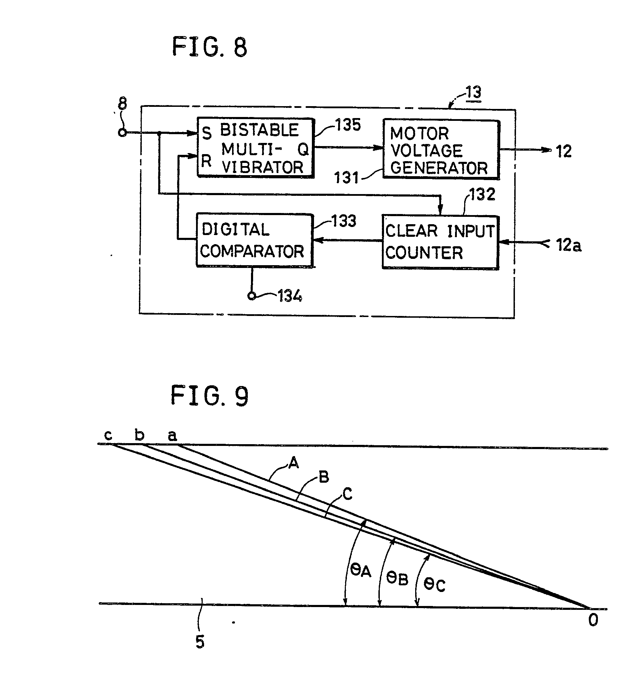

Fig. 8 is a schematic block diagram showing the capstan controller 13. Description is now made on the structure of the capstan controller 13 with reference to Fig. 8. The capstan controller 13 is formed by a motor voltage generator 131, a counter 132, a digital comparator 133 and a bistable multivibrator 135. The motor voltage generator 131 generates servo voltage for rotating the capstan motor 12 at a prescribed speed. The counter 132 receives detection signals 12a indicating the speed and amount of rotation of the capstan motor 12 from the detector 121 as shown in Fig. 1, thereby to count the speed of rotation of the capstan motor 12 on the basis of the detection signals 12a. The counter 132 further receives the intermittent driving command signals in its clear input end. The digital comparator 133 receives in its comparison setting input terminal 134 the outputs from the counter 132 and a comparison setting value for shifting the magnetic tape 5 by one frame. The digital comparator 133 compares the counter outputs of the counter 132 with the comparison setting value, thereby to supply comparison outputs of the reset input end of the bistable multivibrator 135. The bistable multivibrator 135 receives the intermittent driving signals in its set input end S.

Description is now made on the operation of the time-lapse magnetic video recorder in the aforementioned structure.

Since the operation for standard driving is identical to that of a well-known magnetic video recorder, explanation thereof is herein omitted and description is hereafter made with respect to intermittent driving operation. The present invention may be applied to a video recorder used exclusively for intermittent driving, without performing the standard driving operation.

In the intermittent driving operation, the video signal input terminal 1 receives video signals while the intermittent driving command input terminal 8 receives intermittent driving command signals. The video signals received in the video signal input terminal 1 are subjected to recording signal processing by the recording signal processing circuit 2 to be transferred to the magnetic heads 3a and 3b only during the periods when the recording command signals I from the drum controller 10 as shown ah Fig. 6(I) are at high levels, whereby the video signals are recorded on the magnetic tape 5.

On the other hand, only the vertical synchronizing signals of the period $v_0$ as shown at Figs. 3(c), 5(b) and 6(b) are detected and separated from the video signals by the vertical synchronizing signal separation circuit 7. The vertical synchronizing signals are received by the correction vertical synchronizing signal generator 9, to be supplied to the drum controller 10 from the correction vertical synchronizing signal generator 9 as the correction vertical synchronizing signals of the period $v_1$ (=$v_0$+δ) as shown at Figs. 5(g) and 6(g) during the periods when the switching signals $m$ as shown at Fig. 6(m) from the drum controller 10 are at high levels. Upon input of the correction vertical synchronizing signals, the drum controller 10 controls the drum motor 6 so that the detection signals 6a and 6b for the speed and phase of rotation from the drum motor 6 are synchronized with the correction vertical synchronizing signals. As the result, the rotary drum 4 is rotated in synchronization with the correction vertical synchronizing signals from the correction vertical synchronizing signal generator 9.

In other words, while the recording command signals I as shown at Fig. 6(I) are at high level, the video signals processed by the recording signal processing circuit 2 are transferred to the magnetic heads 3a and 3b to be recorded on the magnetic tape 5, and the rotary drum 4 is rotated synchronously with the correction vertical synchronizing signals of the period $v_1$ (=$v_0$+δ) during the periods when the switching signals $m$ as shown at Fig. 6(m) are at high levels, i.e., from the input of the intermittent driving command signals to the change of the recording command signals I from high levels to low levels.

Rotation of the capstan motor 12 is controlled by the capstan controller 13 to feed the magnetic tape 5 through the capstan 11. The capstan controller 13 controls the capstan motor 12 either to feed the magnetic tape 5 by one frame at a prescribed speed upon input of the intermittent driving command signal and then stop the magnetic tape 5 for recording or to feed the magnetic tape 5 at a constant speed lower than the prescribed speed (tape feed speed in standard driving), e.g., 2/3 or 1/2 of the prescribed speed for recording on the magnetic tape 5 by one frame upon input of the intermittent driving command signal.

Description is now made on the fact that video track loci equivalent to prescribed video track loci can be recorded on the magnetic tape 5 in the intermittent magnetic video recorder of the above structure, even if the tape is stopped or the tape feed speed for recording the video signals on the magnetic tape 5 is slower than the prescribed speed. In the following description, the prescribed tape feed speed is represented by $v_0$ (mm/sec), the speed of rotation of the rotary drum 4 at this time is represented by $n_0$ (number/sec), the speed slower than the prescribed speed is represented by $v$ (including zero) (mm/sec) and the speed of rotation of the rotary drum 4 at this time is represented by $n$ (number/sec).

Fig. 9 illustrates loci along which the magnetic heads 3a and 3b pass the magnetic surface of the magnetic tape 5 (only central loci are shown with the width of video tracks omitted). In Fig. 9, a video track locus A from a point 0 to a point $a$ is at the prescribed tape feed speed $v_0$ and a video track angle $\theta_A$, which is the angle between the video track locus and the tape feed direction, of 5 to 6° and a video track locus $B$ from the point 0 to a point $b$ is at the tape feed speed $v$ slower than the prescribed speed $v_0$ and a video track angle $\theta_B$ slightly smaller than the said video track angle $\theta_A$, while a video track locus $C$ from the point 0 to a point $c$ is at a tape feed speed of 0 and a video track angle $\theta_C$ slightly smaller than the said video track angle $\theta_A$ (smaller by about 1/150 of 5 to 6°).

The aforementioned video track loci A, B and C respectively present the following track length:

It is assumed here that the diameter of the rotary drum 4, i.e., the opposite distance between the magnetic heads 3a and 3b mounted on the rotary drum 4 in opposition by 180° is represented by D (mm), the speed of rotation of the rotary drum 4 is represented by N (number/sec), the tape feed speed of the magnetic tape 5 is represeneted by $v$ (mm/sec) and one field period of the video signal is represented by T (sec), whereby video track length l (mm) recorded by one of the magnetic heads 3a and 3b on the magnetic tape 5 is obtained in the following manner:

When the tape feed speed is zero, the video track length L is:

$$L = \pi DNT \qquad (1)$$

The track angle in the track locus is 5 to 6° when the tape feed speed is $v$ and the difference between the same and the angle of the track locus in case where the tape feed speed is zero, and hence the track length l in the case where the tape feed speed $v$ is substantially identical to a value obtained by subtracting the tape feed volume S from the track length L in the case where the tape feed speed is zero, as follows:

$$l \doteq L - S = \pi DNT - vT \qquad (2)$$

Thus, in the case where the tape feed speed $v$ is at the prescribed level $v_0$ and the speed of rotation N of the rotary drum 4 is $n_0$, the video track length $l_A$ of the video track A is as follows:

$$l_A = \pi D n_0 T - v_0 T \qquad (3)$$

In case of standard driving, one rotation period of the rotary drum 4 corresponds to one frame period, i.e., two-field periods, and the relation between the speed of rotation $n_0$ and the one field period T is in the following expression (4) while the above expression (3) is transformed as the following expression (5):

$$n_0 = 1/2\tau \qquad (4)$$

$$l_A = \pi D (1/2\tau) T - v_0 T$$
$$= \tfrac{1}{2}\pi D - v_0 T \qquad (5)$$

The video track locus B, whose tape feed speed V is equal to $v$ and the speed of rotation N of the rotary drum 4 is equal to $n$, has the following video track length $l_B$, from the above expression (2):

$$l_B = \pi D n T - vT \qquad (6)$$

The video track locus C whose tape feed speed V is zero and the speed of rotation N of the rotary drum 4 is equal to $n$ has the following video track length $l_C$ from the above expression (2):

$$l_C = \pi D n T \qquad (9)$$

In order to obtain interchangeability in one field unit between the prescribed tape feed speed $v_0$ and the speed $v$ slower than the same, the video track length $l_B$ of the video track locus B may be made virtually identical to the video track length $l_A$ of the video track locus A, and the following relation can be obtained from the above expressions (5) and (6):

$$\pi D n T - VT = \tfrac{1}{2}\pi D - v_0 T \qquad (8)$$

From this expression (8), the speed of rotation $n$ in the video track locus B is obtained as follows:

$$n = \frac{V - V_0}{\pi D} + 1/2\tau \qquad (9)$$

With attention drawn to the drum rotation period which is the inverse number of the speed of rotation $n$, obtained is a drum correction amount C by normalizing a correction time with the rotation period of the rotary drum 4 in standard driving (the tape is fed at the prescribed speed) by a horizontal period $\tau$ (sec) of the video signal, as follows:

$$C = (1/n_0 - 1/n)/\tau$$

$$= (1/n_0 - \frac{1}{(v-v_0)/\pi D + \tfrac{1}{2}\tau})/\tau$$

Substituting $1/2T = n_0$,

$$C = (\frac{1}{n_0} - \frac{1}{n_0} \cdot \frac{1}{1 + (V-V_0)/\pi D n_0})/\tau$$

Making substitution with $v/v_0 = K$,

$$C = \{1 - \frac{1}{1 - V_0(1-K)/\pi D n_0}\}/N_0\tau$$

$$= \frac{1}{N_0\tau} \cdot \frac{-V_0(1-K)/\pi D n_0}{1 - V_0(1-K)/\pi D n_0}$$

$\tau N_0 = 2T = 1/n_0$ ($N_0$; line number), and substituting $\tau = 1/n_0 N_0$,

$$C = -\frac{N_0 V_0}{\pi D n_0} (1-K) \times \frac{1}{1 - N_0 n 0 (1-K) \pi D n_0 N_0} \qquad (10)$$

Assuming that P indicates on rotation of the rotary drum 4 in the case where the amount $v_0 T$ of reduction for making the track length $l_C$ of the video track locus C virtually identical to the track length $l_A$ of the video track locus A (by standard driving) is converted into the number of horizontal synchronizing lines, the value P is obtained by the following expression (11), since the line number of the locus C is $N_0/2$ and the track length $l_C$ is $\pi D n_0 T$:

$$\pi Dn_0 T : N_0/2 = v_0 T : P/2$$

$$P = \frac{N_0 V_0 \tau}{\pi Dn0\tau} = \frac{N_0 V_0}{\pi Dn0} \qquad (11)$$

Substituting the expression (11) in the above expression (10), the following expression (12) is obtained:

$$C = -P(1-k) \times \frac{1}{1 - P(1-k)/N_0} \qquad (12)$$

The drum correction amount C indicates acceleration of the rotary drum 4 in positive case while indicating slowing down of the same in negative case, and it corresponds to the differential $2\delta$ between the periods of the correction vertical synchronizing signals and vertical synchronizing signals as shown in Fig. 6, since the rotary drum 4 is rotated in synchronization with the correction vertical synchronizing signals form the correction vertical synchronizing signal generator 9.

Therefore, the value $\delta (=C/2)$ in the correction vertical synchronizing signals is made to satisfy the above expression (12), the track length is virtually equalized with that of the case where recording is made at the prescribed speed $v_0$, even if the intermittent recording is made while the magnetic tape 5 is stopped or at the speed $v$ slower than the prescribed tape feed speed $v_0$.

For example, in case of PAL system video signals of the VHS standard, P=3.002 with substitution of $N_0$=625, $n_0$=25 Hz, rotary drum diameter D=62 mm and tape feed speed $v_0$=23.39 mm. Assuming that the tape feed speed is zero, $C=2\delta=-3.02$ from k=0. In other words, video track length corresponding to the format can be obtained by slowing down the speed of rotation of the rotary drum 4 by 3H, i.e., about three times the horizontal interval in the case where the tape feed speed is zero. When the tape feed speed V is made to be 2/3 of the standard, $C=2\delta=-1$ from k=2/3.

Further, the track length of that recorded in the tape fed at a speed slower than the standard speed $v_0$ or the stopped state is virtually identical to the track length of that recorded in the tape fed at the standard speed $v_0$, and hence the tape is interchangeable also with respect to the H alignment.

On the other hand, when the signals recorded in the tape fed at the speed $v$ (including zero) slower than the standard speed $v_0$ are reproduced at the standard tape feed speed $v_0$, the video track angle is slightly changed as shown in Fig. 9. Therefore, the reproduced FM signals are in triangular envelopes which tend to cause noise bars, whereas interchangeability of the tape format is not damaged. Recording and reproduction are made at the same tape feed speed in case of self recording/reproduction, and hence the reproduced FM signals are in flat envelopes whereby the reproduced FM signals are most effectively detected, leading to advantages in the signal-to-noise ratio.

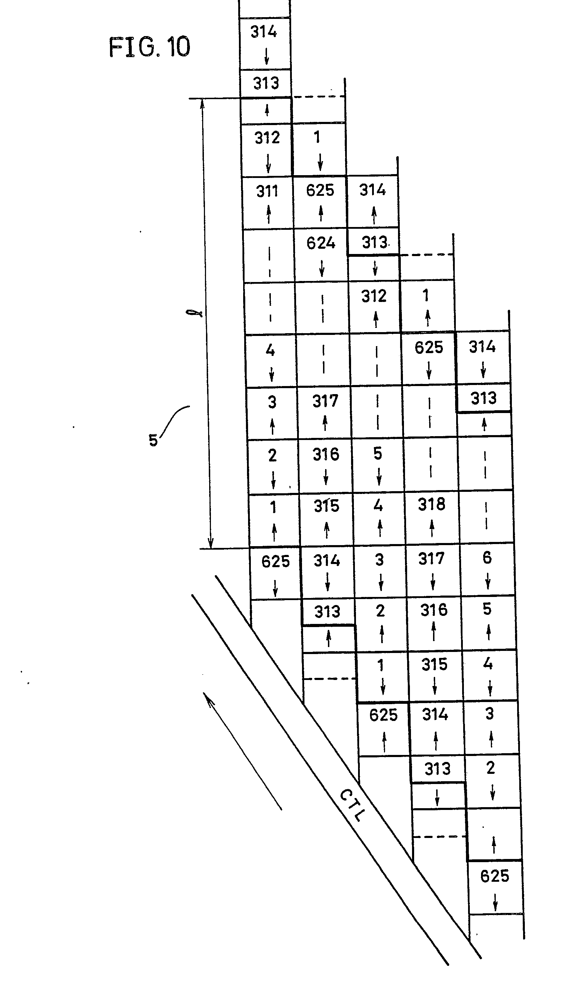

As obvious from the above description, even if the speed for feeding the magnetic tape 5 in recording is different from the standard speed, the speed and phase of rotation of the rotary drum 4 are corrected on the basis of the correction vertical synchronizing signals so as to make recording with the video track length, H alignment and recording positions of the vertical synchronizing signals corresponding to those in recording at the standard speed $v_0$, and hence recording is made on the magnetic tape 5 as shown in Fig. 10 in prescribed relation with the vertical synchronizing signals as shown in Figs. 6(b) and (g) to attain interchangeability and obtain fine reproduced pictures. In Fig. 10, symbol I indicates the video-track length for one field (96.922 mm in PAL signal VHS standard), the range of which defines the reproduced signal range, while numerals 1 to 625 indicate line numbers and arrows under the same indicate burst phases.

As hereinabove descirbed, even if the recording is made on the magnetic tape 5 fed at the speed $v$ (including zero) slower than the standard speed $v_0$, interchangeability of the recorded magnetic tape 5 is retained by making the speed of rotation of the rotary drum 4 in response to the period $v_1$ of the correction vertical signals from the correction vertical synchronizing signal generator 9 in relation to the speed of rotation of the rotary drum 4 in response to the period $v_0$ of the vertical synchronizing signals, and detailed description is now made on the fact that such relation can be retained in respective recording modes.

With respect to the vertical synchronizing signals as shown in Fig. 6(b) and those shown in Fig. 6(g), those at the same timing immediately before occurrence of a time lag are indicated by $v_0$ and $v_0'$ and subsequently by $v_1, v_2, v_3, ..., v_n(v_0)$ and $v_1', v_2', v_3', ..., v_n'(v_0')$ respectively, for convenience of illustration.

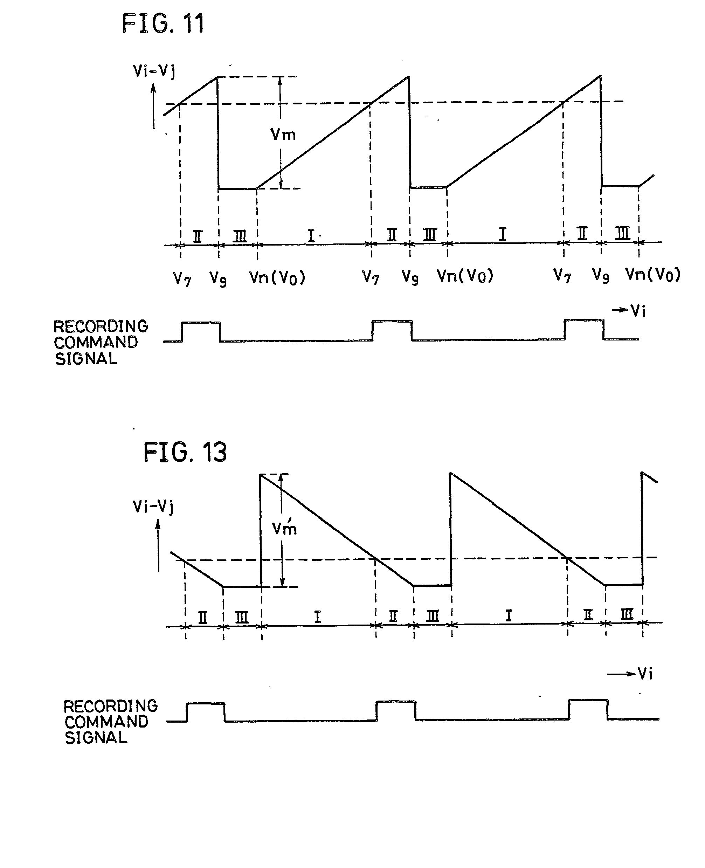

Fig. 11 is a time chart showing the relation of the time lags between the vertical synchronizing signals $v_i$ and correction vertical synchronizing signals $v_i'$ to the recording command signals, and symbol I indicates transient response periods of a drum servo system including the drum controller 10, drum motor 6 and rotary drum 4, which periods are predetermined by servo characteristics of respective servo systems and the maximum change width of the time lag $v_i' - v_i$ as indicated by symbol $v_m$ in Fig. 11. Thus, the periods I are effected from the recording timing. When periods II are reached, the drum servo system enters stationary periods, to be rotated at the speed and phase of rotation of the rotary drum 4 in synchronization with correction vertical synchronizing signals $v_1'$, $v_8'$ and $v_9'$. The recording command signals are applied simultaneously in the periods II, whereby the video signals are recorded on the magnetic tape 5 in the standard format.

Since correction of the speed and phase of rotation of the rotary drum 4 is not required after recording, the correction vertical synchronizing signals are in standby states for subsequent correction commands while keeping prescribed time lags with the vertical synchronizing signals. Symbol III in Fig. 11 indicates the standby periods. The time lags $v_i'-v_i$ in the periods III may be arbitrarily selected within the range of $v_m$, whereby the correction vertical synchronizing signals can be readily matched with the vertical synchronizing signals in the circuit arrangement, and the time lags $v_i'-v_i$ in the periods III are zero in this case.

By virtue of the control as shown in Fig. 11, respective periods in which the recording command signals are applied serve as the stationary periods in which at least the rotary drum 4 is synchronized with the correction vertical synchronizing signals, and hence the rotary drum 4 is rotated at a constant speed based on the correction vertical synchronizing signals, thereby to obtain the desired recording format as hereinabove described.

The foregoing description has been made on the fact that the recording format equivalent to the standard recording format as shown in Fig. 10 is obtained by appropriately correcting the speed and phase of rotation of the rotary drum 4 by the correction vertical synchronizing signals even if the tape feed speed is different from the standard speed, and description is now made on the fact that an interchangeable recording format can be obtained in practice substantially with no hindrance in reproduction by changing the manners of generating the correction vertical synchronizing signals and correcting the speed and phase of rotation of the rotary drum 4, although the standard recording format cannot be obtained as a matter of course.

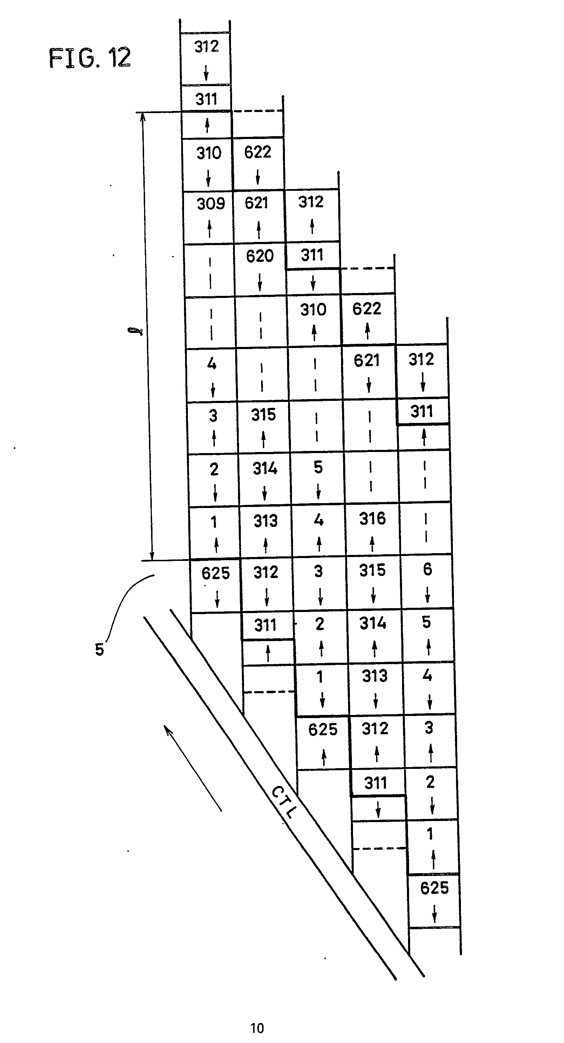

Fig. 12 shows a recording format for PAL system video signals in case where the speed for feeding the magnetic tape 5 is zero and the rotary drum 4 is accelerated by 1H per rotation, i.e., the period $v_1$ of the correction vertical synchronizing signals from the correction vertical synchronizing signal generator 9 is shorter by 0.5H than the period $v$ of the vertical synchronizing signals. Conditions other than the tape feed speed of the magnetic tape 5 and the speed of rotation of the rotary drum 4 correspond to those of the VHS standard. In the case where the magnetic tape feed speed is zero, the speed of rotation of the rotary drum 4 is normally slowed down by 3H per rotation, and the period $v_1$ of the correction vertical synchronizing signals from the correction vertical synchronizing signal generator 9 is longer by 1.5H than the period $v$ of the vertical synchronizing signals.

Reproduction of the signals recorded on the magnetic tape 5 as shown in Fig. 12 is made by one magnetic head 3a to the half of the line number 311 of a first frame, and a magnetic head switching command signal is effected at the timing half the line number 311 to switch the operation to the other magnetic head 3b which thereafter makes the reproduction for the remaining half of the line number 311 to the line number 621. At the end of the line number 621, the operation is again switched to the magnetic head 3a, which makes reproduction from the line number 1 of a second frame. The respective frame signals are subsequently reproduced thereafter in a similar manner to the above.

Continuity of the signals reproduced in the recording format as shown in Fig. 12 causes no problem in the switching at the half of the line number 311 since identical reproduced signals are directly switched. However, in switching at the line number 621, video signals of line numbers 622 to 625 are skipped to the line number 1 of the subsequent frame. However, the switching is smoothly made with no irregulation of intervals between the horizontal synchronizing signals while the burst phases are also normally switched such that the 621st burst phase is upward and the subsequent 1st one is downward. Thus, the skipped 622 to 625th signals are only by 4H of the lower ends of reproduced pictures and the horizontal synchronizing frequency decreased by 621/625 is sufficiently pulled in the horizontal lock-in range on synchronization of the monitor TV, whereby pictures are reproduced substantially with no hindrance.

In such intermittent recording, further, the relation of the time lags between the vertical synchronizing signals $v_i$ and the correction vertical synchronizing signals $v_i'$ to the recording command signals is as shown in Fig. 13 and the maximum change width $Vm'$ is

$$\frac{+1H}{2}\times$$

number of vertical synchronizing signals in period (I+II), which is 1/3 of the maximum change width

$$(=\frac{-3H}{2}\times$$

number of vertical synchronizing signals in period (I+II)) in the normal correction through which the rotary drum 4 is delayed by 3H, whereby the transient response period of the drum servo system is shortened to effect intermittent recording in a further reduced period.

Although the pair of magnetic heads 3a and 3b in the aforementioned embodiment are on the same plane, the magnetic head 3b for recording the second field may be provided in a position higher by

$$(1-\frac{V}{V_0})$$

times in video track pitch than the magnetic head 3a normally positioned for recording the first field, and in this case, the video track width by the magnetic head 3a is equal to that by the magnetic head 3b, whereby the reproduced FM envelopes in the reproducing operation can most effectively be detected in both of the first and second fields.

Although the respective embodiments have been described with respect to PAL system video signals of the VHS standard, the present invention can also be applied to NTSC system video signals of the β standard, as a matter of course.

## Claims

1. A time-lapse magnetic video recorder comprising:
   a rotary drum (4);
   a drum motor (6) for driving said rotary drum;
   magnetic heads (3a, 3b) mounted on said rotary drum;
   means (11, 12) for causing a magnetic recording medium (5) to move past the rotary drum at a predetermined speed during a reproducing process and to remain stationary or to move past the rotary drum at a speed different from said predetermined speed during a recording process, characterized in that said recorder further comprises:
   control means (10) for controlling said drum motor such that the relative speed of said magnetic heads and said recording medium during the recording process is substantially equal to that during the reproducing process.

2. A video recorder as claimed in claim 1, further comprising:
   recording signal processing means (2) receiving composite video signals for performing recording processing of said composite video signals;
   vertical synchronizing signal separation means (7) receiving said composite video signals for separating vertical synchronizing signals from said composite video signals; and
   corrected vertical signal generation means (9) receiving said vertical synchronizing signals separated by said vertical synchronizing signal separation means for outputting corrected vertical synchronizing signals different in frequency from said vertical synchronizing signals;
   wherein said drum control means (10) comprises means for receiving said corrected vertical synchronizing signals outputted from said corrected vertical synchronizing signal generation means for rotating said drum motor in synchronization with said corrected vertical synchronizing signals.

3. A video recorder as claimed in claim 2, further comprising a time-lapse driving terminal (8) and means for selectively transmitting either said vertical synchronizing signals or said corrected vertical synchronizing signals to said drum control means (10) in response to the absence or presence respectively of a signal at said time-lapse driving terminal and wherein said corrected vertical signal generating means (9) is adapted such that said corrected vertical synchronizing signals are different in phase from said vertical synchronizing signals.

4. A video recorder as claimed in claim 2 or claim 3, wherein said corrected vertical signal generation means includes:
   synchronizing oscillation means (90) oscillating in synchronization with said vertical synchronizing signals,
   counter means (905) for counting oscillating pulses from said synchronizing oscillation means to a predetermined number, and
   output means (906) for supplying said correction vertical synchronizing signals to said drum control means in response to counting of said predetermined number of said oscillating pulses by said counter means.

5. A video recorder as claimed in claim 4, wherein:
   said counter means includes means for presetting said predetermined number in response to input of intermittent driving command signals.

6. A video recorder as claimed in any one of claims 2 to 5, wherein:
   said drum motor is provided with means for detecting speed and phase of rotation of said drum motor,
   said drum motor control means including:
   drum servo voltage generation means (101) generating servo voltage for controlling said drum motor so that said speed and phase of rotation detected by said detection means are synchronized with said corrected vertical synchronizing signals, and
   servo voltage output means (103) for supplying said servo voltage from said drum servo voltage generation means to said drum motor.

7. A video recorder as claimed in claim 6, wherein said drum servo voltage generation means includes:
   speed control means (106) for controlling the speed of rotation of said drum motor on the basis of said detected speed of rotation and said corrected vertical synchronizing signals, and
   phase control means (107) for controlling the phase of rotation of said drum motor on the basis of said detected phase of rotation and said corrected vertical synchronizing signals.

8. A method of time-lapse magnetic video recording wherein a recording medium (5) is driven past a rotating magnetic head (3a, 3b) at a predetermined speed during a reproducing process, but wherein the recording medium is caused to be stationary or to be driven past the magnetic head at a speed different from said predetermined speed during a recording process, characterised in that:
   the speed of rotation of the recording head is controlled such that the relative speed of the magnetic head and the recording medium during the recording process is substantially equal to that during the reproducing process.

## Patentansprüche

1. Magnetisches Zeitraffer-Videoaufzeichnungsgerät mit:

einer Drehtrommel (4);

einem Trommelmotor (6) zum Antreiben der Drehtrommel;

Magnetköpfen (3a, 3b), die auf der Drehtrommel angebracht sind;

einer Einrichtung (11, 12), die verursacht, daß sich ein magnetisches Aufzeichnungsmedium (5) an der Drehtrommel mit einer vorbestimmten Geschwindigkeit während eines Wiedergabeverfahrens vorbeibewegt und ortsfest verbleibt oder sich an der Drehtrommel mit einer von der vorbestimmten Geschwindigkeit unterschiedlichen Geschwindigkeit während eines Aufzeichnungsverfahrens vorbeibewegt;

gekennzeichnet durch eine Steuereinrichtung (10) zum Steuern des Trommelmotors derart, daß die Relativgeschwindigkeit der Magnetkopfe und des Aufzeichnungsmediums während des Aufzeichnungsverfahrens im wesentlichen gleich der während des Wiedergabeverfahrens ist.

2. Videoaufzeichnungsgerät nach Anspruch 1 mit:

einer Aufzeichnungssignalverarbeitungseinrichtung (2), die zusammengesetzte Videosignale zum Durchführen. des Aufzeichnungsverfahrens der zusammengesetzten Videosignals empfängt;

einer Vertikalsynchronisationssignaltrenneinrichtung (7), die die zusammengesetzten Videosignale zum Trennen der Vertikalsynchronisations-signale von den zusammengesetzten Videosignalen empfängt; und

einer Korrekturvertikalsignalerzeugungseinrichtung (9), die die Vertikalsynchronisationssignale, die durch die Vertikalsynchronisationssignaltrenneinrichtung getrennt sind, zum Ausgeben von korrigierten Vertikalsynchronisationssignalen, die in Frequenz von den Vertikalsynchronisationssignalen unterschiedlich sind, empfängt;

wobei die Trommelsteuereinrichtung (10) eine Einrichtung zum Empfangen der korrigierten Vertikalsynchronisationssignale aufweist, die von der Korrekturvertikalsynchronisationssignalerzeugungseinrichtung zum Drehen des Trommelmotors in Synchronisation mit den korrigierten Vertikalsynchronisationssignalen ausgegeben sind.

3. Videoaufzeichnungsgerät nach Anspruch 2 mit:

einem Zeitrafferantriebsanschluß (8) und einer Einrichtung zum selektiven Übertragen von entweder den Vertikalsynchronisationssignalen oder den korrigierten Vertikalsynchrnisationssignalen zu der Trommelsteuereinrichtung (10) als Reaktion auf die Abwesenheit bzw. die Gegenwart eines Signales an dem Zeitrafferantriebsanschluß, wobei die Korrekturvertikalsignalerzeugungseinrichtung (9) an ausgelegt ist, daß die korrigierten Vertikalsynchronisationssignale in der Phase unterschiedlich von den Vertikalsynchronisationssignalen sind.

4. Videoaufzeichnungsgerät nach Anspruch 2 oder 3, bei dem die Korrekturvertikalsignalerzeugungseinrichtung aufweist:

eine synchronisierende Oszillationseinrichtung (90), des in Synchronisation mit den Vertikalsynchronisationssignalen schwingt,

eine Zählereinrichtung (905) zum Zählen der oszillierenden Pulse von der synchronisierenden Oszillationseinrichtung bis zu einer vorbestimmten Zahl, und

eine Ausgabeeinrichtung (906) zum Zuführen der korrigierten Vertikalsynchronisationssignale zu der Trommelsteuereinrichtung als Reaktion auf das Zählen der vorbestimmten Zahl von Oszillierenden Pulsen durch die Zählereinrichtung.

5. Videoaufzeichnungsgerät nach Anspruch 4, bei dem die Zählereinrichtung eine Einrichtung aufweist zum Voreinstellen der vorbestimmten Zahl als Reaktion auf die Eingabe von intermittierenden Antriebsbefehlsignalen.

6. Videoaufzeichnungsgerät nach einem der Ansprüche 2 bis 5, bei dem

der Trommelmotor mit einer Einrichtung zum Erfassen von Geschwindigkeit und Phase der Drehung des Trommelmotors versehen ist,

die Trommelmotorsteuereinrichtung aufweist:

eine Trommelservospannungserzeugungseinrichtung (101), die eine Servospannung zum Steuern des Trommelmotors so erzeugt, daß die Geschwindigkeit und Phase der Drehung, die durch die Erfassungsvorrichtung erfaßt sind, mit den korrigierten Vertikalsynchronisationssignalen synchronisiert sind, und

eine Servospannungsausgabeeinrichtung (103) zum Zuführen der Servospannung von der Trommelservospannungserzeugungseinrichtung zu dem Trommelmotor.

7. Videoaufzeichnungsgerät nach Anspruch 6, bei dem die Trommelservospannungserzeugungseinrichtung aufwest:

eine Geschwindigkeitssteuereinrichtung (106) zum Steuern der Geschwindigkeit der Drehung des Trommelmotors auf der Basis der erfaßten Geschwindigkeit der Drehung und der korrigierten Vertikalsynchronisationssignale, und

eine Phasensteuereinrichtung (107) zum Steuern der Phase der Drehung des Trommelmotors auf der Basis der erfaßten Phase der Drehung und der korrigierten Vertikalsynchronisationssignale.

8. Verfahren zum zeitraffenden magnetischen Videoaufzeichnen, bei dem ein Aufzeichnungsmedium (5) an einem rotierenden Magnetkopf (3a, 3b) mit einer vorbestimmten Geschwindigkeit während eines Wiedergabeverfahrens vorbeigeführt wird, aber bei dem das Aufzeichnungsmedium ortsfest gehalten wird oder an dem Magnetkopf mit einer Geschwindigkeit während eines Aufzeichnungsverfahrens vorbeigeführt wird, die unterschiedlich von der vorbestimmten Geschwindigkeit ist, dadurch gekennzeichnet, daß die Geschwindigkeit der Drehung des Aufzeichnungskopfes so gestehert ist, daß die Relativgeschwindigkeit des Magnetkopfes und des Aufzeichnungsmediums während des Aufzeichnungsverfahrens im wesentlichen gleich der während des Wiedergabeverfahrens ist.

**Revendications**

1. Un magnétoscope à fonctionnement intermittent comprenant:
   un tambour tournant (4);
   un moteur de tambour (6) pour entraîner le tambour tournant;
   des têtes magnétiques (3a, 3b) montées sur le tambour tournant;
   des moyens (11, 12) destinés à faire en sorte qu'un support d'enregistrement magnétique (5) se déplace devant le tambour tournant à une vitesse prédéterminée pendant un processus de reproduction, et reste fixe ou se déplace devant le tambour tournant à une vitesse différente de la vitesse prédéterminée pendant un processus d'enregistrement, caractérisé en ce que ce magnétoscope comprend en outre:
   des moyens de commande (10) qui sont destinés à commander le moteur de tambour de façon que la vitesse relative des têtes magnétiques et du support d'enregistrement pendant le processus d'enregistrement soit pratiquement égale à celle qui existe pendant le processus de reproduction.

2. Un magnétoscope selon la revendication 1, comprenant en outre:
   des moyens de traitement de signal d'enregistrement (2) qui reçoivent des signaux vidéo composites pour effectuer un traitement d'enregistrement de ces signaux vidéo composites;
   des moyens de séparation de signaux de synchronisation verticale (7) qui reçoivent les signaux vidéo composites pour séparer des signaux de synchronisation verticale à partir des signaux vidéo composites; et
   des moyens de génération de signaux de synchronisation verticale corrigés (9) qui reçoivent les signaux de synchronisation verticale séparés par les moyens de séparation de signaux de synchronisation verticale, pour émettre des signaux de synchronisation verticale corrigés ayant une fréquence différente de celle des signaux de synchronisation verticale;
   dans lequel les moyens de commande de tambour (10) comprennent des moyens qui sont destinés à recevoir les signaux de synchronisation verticale corrigés émis par les moyens de génération de signaux de synchronisation verticale corrigés, pour faire tourner le moteur de tambour en synchronisme avec les signaux de synchronisation verticale corrigés.

3. Un magnétoscope selon la revendication 2, comprenant en outre une borne d'entraînement intermittent (8) et des moyens pour transmettre sélectivement aux moyens de commande de tambour (10) soit les signaux de synchronisation verticale, soit les signaux de synchronisation verticale corrigés, en fonction respectivement de l'absence ou de la présence d'un signal sur la borne d'entraînement intermittent, et dans lequel les moyens de génération de signaux de synchronisation verticale corrigés (9) sont conçus de façon que les signaux de synchronisation verticale corrigés aient une phase différente de celle des signaux de synchronisation verticale.

4. Un magnétoscope selon la revendication 2 ou la revendication 3, dans lequel les moyens de génération de signaux de synchronisation verticale corrigés comprennent:
   des moyens de génération d'oscillation de synchronisation (90) qui oscillent en synchronisme avec les signaux de synchronisation verticale,
   des moyens de comptage (905) qui comptent jusqu'à un nombre prédéterminé des impulsions d'oscillation provenant des moyens de génération d'oscillation de synchronisation, et
   des moyens de sortie (906) qui sont destinés à appliquer les signaux de synchronisation verticale corrigés aux moyens de commande de tambour, sous l'effet du comptage du nombre prédéterminé d'impulsions d'oscillation par les moyens de comptage.

5. Un magnétoscope selon la revendication 4, dans lequel
   les moyens de comptage comprennent des moyens destinés à charger le nombre prédéterminé sous l'effet de l'application de signaux d'ordre d'entraînement intermittent.

6. Un magnétoscope selon l'une quelconque des revendications 2 à 5, dans lequel
   le moteur de tambour est équipé de moyens destinés à détecter la vitesse et la phase de rotation du moteur de tambour,
   les moyens de commande de moteur de tambour comprenant:
   des moyens de génération de tension d'asservissement de tambour (101) qui produisent une tension d'asservissement pour commander le moteur de tambour de façon que la vitesse et la phase de rotation que détectent les moyens de détection soient synchronisées avec les signaux de synchronisation verticale corrigés, et
   des moyens de sortie de tension d'asservissement (103) qui sont destinés à appliquer au moteur de tambour la tension d'asservissement qui provient des moyens de génération de tension d'asservissement de tambour.

7. Un magnétoscope selon la revendication 6, dans lequel les moyens de génération de tension d'asservissement de tambour comprennent:
   des moyens de commande de vitesse (106) qui sont destinés à commander la vitesse de rotation du moteur de tambour sur la base de la vitesse de rotation détectée et des signaux de synchronisation verticale corrigés, et
   des moyens de commande de phase (107) qui sont destinés à commander la phase de rotation du moteur de tambour sur la base de la phase de rotation détectée et des signaux de synchronisation verticale corrigés.

8. Un procédé d'enregistrement vidéo magnétique intermittent dans lequel un support d'enregistrement (5) est entraîné de façon à passer devant une tête magnétique tournante (3a, 3b) à une vitesse prédéterminée pendant un processus de reproduction, mais dans lequel le support d'enregistrement reste fixe ou bien est entraîné de façon à passer devant la tête magnétique à une vitesse différente de la vitesse prédéterminée

pendant un processus d'enregistrement, caractérisé en ce que:

la vitesse de rotation de la tête d'enregistrement est commandée de façon que la vitesse relative de la tête magnètique et du support d'enregistrement pendant le processus d'enregistrement soit pratiquement égale à la vitesse pendant le processus de reproduction.

EP 0 179 655 B1

FIG. 1

RECORDING SIGNAL PROCESSING CIRCUIT

VIDEO SIGNAL

VERTICAL SYNCHRONIZING SIGNAL SEPA -RATION CIRCUIT

CORRECTION VERTICAL SYNCHRONIZING SIGNAL GENERATOR

DRUM MOTOR

DETEC -TOR

CAPSTAN MOTOR

DETECTOR

DRUM CONTROLLER

CAPSTAN CONTROLLER

INTERMITTENT DRIVING COMMAND SIGNALS

1

FIG. 2

FIG. 3

## FIG. 4

VERTICAL
SYNCHRONIZING
SIGNAL

901

902
MONOSTABLE
MULTI
-VIBRATER

903
TRAILING
EDGE
DETECTION

904
TRAILING
EDGE
DETECTION

905
DOWN COUNTER
INPUT
LOAD   PRESET

90

908

907

906
MONOSTABLE
MULTI
-VIBRATER

UP COUNTER
INPUT   OUTPUT
LOAD   PRESET

909

910
PRESET INPUT

911

DIGITAL
COMPARATOR

912
PRESET INPUT

104

8
INTERMITTENT DRIVING
COMMAND SIGNAL

9

105

10

EP 0 179 655 B1

FIG. 5

FIG. 6

# EP 0 179 655 B1

## FIG. 7

## FIG. 8

## FIG. 9

FIG. 10

FIG. 11

RECORDING
COMMAND
SIGNAL

FIG. 13

RECORDING
COMMAND
SIGNAL

9

FIG. 12